(19) Europäisches Patentamt
European Patent Office
Office européen des brevets

(11) EP 3 955 018 B1

(12) **EUROPEAN PATENT SPECIFICATION**

(45) Date of publication and mention of the grant of the patent:
**15.01.2025 Bulletin 2025/03**

(21) Application number: **21184710.8**

(22) Date of filing: **09.07.2021**

(51) International Patent Classification (IPC):
***G01S 5/02*** *(2010.01)* ***B64G 1/24*** *(2006.01)*

(52) Cooperative Patent Classification (CPC):
**G01S 5/0295; B64G 1/242;** G01S 5/0027; G01S 2205/01

(54) **SATELLITE ORBIT PROPAGATOR USING SHIP AUTOMATIC IDENTIFICATION SYSTEM DATA AND CONTROL METHOD THEREOF**

SATELLITENBAHNPROPAGATOR UNTER VERWENDUNG VON SCHIFF-AIS-DATEN UND STEUERUNGSVERFAHREN DAFÜR

PROPAGATEUR D'ORBITE SATELLITAIRE UTILISANT DES INFORMATIONS DE SYSTÈME D'IDENTIFICATION AUTOMATIQUE DE NAVIRE ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2020 KR 20200086616**

(43) Date of publication of application:
**16.02.2022 Bulletin 2022/07**

(73) Proprietor: **Korea Aerospace Research Institute**
**Daejeon 34133 (KR)**

(72) Inventor: **Lee, Seon Ho**
**Daejeon 34020 (KR)**

(74) Representative: **RGTH**
**Patentanwälte PartGmbB**
**Neuer Wall 10**
**20354 Hamburg (DE)**

(56) References cited:
**WO-A1-2014/156634**
**CN-A- 109 507 665**
**US-A1- 2013 058 271**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

BACKGROUND

Technical field

The present disclosure relates to a satellite orbit propagator and a control method thereof, and more particularly, to a satellite orbit propagator using ship automatic identification information and a control method thereof.

Background Art

A satellite orbit propagator is a device that estimates the current position and velocity of a satellite in orbit (or predicts the position and velocity of a satellite in the near future) by fusing a satellite orbit model with observation data.

The satellite orbit propagator may be implemented in software (SW) and mounted on a satellite or ground station system. The satellite orbit propagator mounted on the ground station can be used to predict the orbit for the next 24 to 48 hours and determine the time and attitude for imaging a target. A satellite orbit propagator mounted on the satellite may determine the position and velocity of the satellite to generate a reference coordinate system for imaging the target.

A conventional satellite orbit propagator uses position and velocity information of a satellite acquired from a satellite-mounted GPS receiver as observation data, where the GPS receiver requires four or more GPS satellite signal observations. However, the conventional satellite orbit propagator has a problem in that it is impossible to acquire observation data when the GPS receiver malfunctions or the GPS signal reception rate decreases.

For example, US 2013/058271 A1 describes a satellite surveillance system based on a database that contains information on the AIS transmitters for ships and buoys. However, US 2013/058271 A1 does not disclose the features of present invention as claimed in the characterizing portion of the independent claims.

SUMMARY

Accordingly, an object of the present disclosure to provide a satellite orbit propagator using ship automatic identification information and a control method thereof.

In order to accomplish the technical objectives mentioned above, a method according to the present disclosure includes acquiring ship automatic identification system data (AIS data) during a predetermined period of time, performing a validation test on the AIS data acquired during the predetermined period of time, converting the AIS data determined to be suitable through the validation test, from an earth coordinate system into an inertial coordinate system, and estimating a position and a velocity of a satellite by using the AIS data converted into the inertial coordinate system and a predetermined orbit propagator model.

The method further includes calculating a circular dispersion for the AIS data acquired during the predetermined period of time.

A condition for determining suitability in the validation test includes a test criterion for a circular dispersion in which the calculated circular dispersion is determined to be equal to or greater than a predetermined reference value.

The condition for determining suitability in the validation test may further include a test criterion for the number of ships in which the number of ships for which the AIS data is acquired during the predetermined period of time is determined to be equal to or greater than a predetermined reference value.

A reference value of the test criterion for circular dispersion and a reference value of the test criterion for number of ships may be increased as a success rate of determining suitability in the validation test for the AIS data increases.

In order to accomplish the technical objectives mentioned above, a device as set forth in claim 4 is provided.

Advantageous Effects

According to the present disclosure, there is an advantage in that the orbit can be determined using the automatic identification system (AIS) data when a satellite-mounted GPS receiver malfunctions or a GPS satellite signal reception rate decreases. In particular, while the precision is lower than that of the existing GPS-based orbit propagator, there is an advantage that it is useful for determining the initial orbit after launching a satellite.

BRIEF DESCRIPTION OF THE DRAWING

FIG. 1 is a block diagram illustrating a configuration of a satellite orbit propagator according to an embodiment of the present disclosure.

FIG. 2 illustrates a valid reception area of a satellite-mounted AIS receiver and AIS observation data on the Korean Peninsula.

FIG. 3 is a flowchart provided for explaining an operation of a satellite orbit propagator according to an embodiment of the present disclosure.

FIG. 4 is a diagram illustrating a test criterion for number of ships according to an embodiment of the present disclosure.

FIG. 5 is a diagram illustrating a test criterion for circular dispersion according to an embodiment of the present disclosure.

FIG. 6 illustrates a test result for number of ships according to an embodiment of the present disclosure.

FIG. 7 illustrates a test result for circular dispersion according to an embodiment of the present disclosure.

DETAILED DESCRIPTION

Hereinafter, preferred embodiments of the present disclosure will be described in detail with reference to the accompanying drawings so that those with ordinary knowledge in the art can easily achieve the present disclosure.

FIG. 1 is a block diagram illustrating a configuration of a satellite orbit propagator according to an embodiment of the present disclosure.

Referring to FIG. 1, the satellite orbit propagator according to the present disclosure may include an AIS reception unit 110, a data acquisition unit 120, a circular dispersion calculation unit 130, a control unit 140, a validation test unit 150, a coordinate conversion unit 160, and a satellite orbit propagator unit 170.

The AIS reception unit 110 is mounted on a satellite, and the data acquisition unit 120, the circular dispersion calculation unit 130, the control unit 140, the validation test unit 150, the coordinate conversion unit 160, and the satellite orbit propagator unit 170 may be mounted on the satellite or a ground station system.

When the data acquisition unit 120 or the like is mounted on the ground station system, the AIS data received by the AIS reception unit 110 may be downlinked from the satellite to the ground station system.

The AIS reception unit 110 is mounted on the satellite and receives automatic identification system data (AIS data) that is transmitted wirelessly from a ship.

The ship automatic identification device mounted on the ship may wirelessly transmit the AIS data including ship operation information at predetermined intervals. The AIS data may include ship information and cruise information (time, position, velocity, direction angle, and the like).

FIG. 2 illustrates a valid reception area of a satellite-mounted AIS receiver and AIS observation data on the Korean Peninsula.

As illustrated in FIG. 2A, the valid reception area of AIS data is 700 km in the center radius of the satellite. On the other hand, as illustrated in FIG. 2B, the average number of AIS-equipped ships entering Korea is at least 420 ships/day, which has the advantage that the number of AIS observation data is sufficient.

The data acquisition unit 120 acquires the AIS data received by the AIS reception unit 110.

When the data acquisition unit 120, the circular dispersion calculation unit 130, the control unit 140, the validation test unit 150, the coordinate conversion unit 160 and the satellite orbit propagator unit 170 are mounted on the ground station system, the AIS data received by the AIS reception unit 110 may be transmitted to the ground station system through satellite communication.

The circular dispersion calculation unit 130 may calculate a circular dispersion for the ship automatic identification information data acquired during a predetermined period of time. In this example, the predetermined period of time may be determined using the received AIS data, to be an update cycle time corresponding to a cycle for updating the satellite position and velocity of the satellite orbit propagator. For example, when the satellite position and velocity are updated in the satellite orbit propagator every 1 minute, the update cycle time may be set to be 1 minute. Of course, depending on embodiments, the predetermined period of time may be determined from any time to the update time of the satellite orbit propagator.

The validation test unit 150 may perform a validation test on the AIS data acquired by the data acquisition unit 120 during a predetermined period of time to determine whether the AIS data is suitable or not.

The validation test unit 150 may determine whether the AIS data is suitable or not based on a predetermined suitability determination condition, and the suitability determination condition may include a test criterion value for number of ships and a test criterion value for circular dispersion. In addition, the test criterion value for number of ships and the test criterion value for circular dispersion of the suitability determination condition may be set differently according to the success rate of determining suitability, which will be described below.

The control unit 140 controls the overall operation of the satellite orbit propagator according to the present disclosure. The control unit 140 may calculate the success rate of determining suitability of the validation test for the AIS data, and automatically change the test criterion value for number of ships and the test criterion value for circular dispersion accordingly.

The coordinate conversion unit 160 may convert the AIS data determined to be suitable through the validation test, from the earth coordinate system to the inertial coordinate system.

While the satellite orbit is expressed in the inertial coordinate system, the position and velocity information of the ship in the received AIS data is expressed in the earth coordinate system. Accordingly, it is necessary to convert the position and velocity information of the ship in the received AIS data from the earth coordinate system to the inertial coordinate system. In order to calculate the direction cosine matrix for this purpose, correction values for observation time (polar motion, earth rotation, nutation, precession, bias, and the like) are required, and these values are regularly distributed by the International Astronomical Union (IAU)/Standards Of Fundamental Astronomy (SOFA). For reference, the precision of the direction cosine matrix may be determined according to the range of the correction values considered. The conversion of information expressed in the earth coordinate system to the inertial coordinate system is well known, and accordingly, a detailed description thereof will be omitted.

The satellite orbit propagator unit 170 may estimate the position and velocity of the satellite using the AIS data converted into the inertial coordinate system and a predetermined orbit propagator model. The orbit information of the satellite can be calculated using the position and velocity information converted into the inertial coordinate system and the orbit propagator model, and commonly used satellite orbit propagator models include Two Body Propagator, J2 Propagator, J4 Propagator, and Simplified General Perturbation (SGP) Model, and the like. Each of these models has a different amount of calculation, so there may be differences in precision performance. As described above, the satellite orbit propagators that estimate the current position and velocity of a satellite on the satellite orbit or predict the position and velocity of the satellite in the near future by fusing the satellite orbit model of the corresponding satellite and the observation data observed by the corresponding satellite, are already well known, and accordingly, a detailed description thereof will be omitted.

FIG. 3 is a flowchart provided for explaining an operation of a satellite orbit propagator according to an embodiment of the present disclosure.

Before providing description with reference to FIG. 3, first, the following are the definition of the terms.

$T_k$: time of updating satellite orbit propagator using AIS data

$N_k$: number of ships from which AIS data is acquired between times $T_{k-1}$ and $T_k$

$\{X_k^i\}_{i=1}^{N_k}$ : longitudinal position of a ship included in AIS data acquired between times $T_{k-1}$ and $T_k$

$\{Y_k^i\}_{i=1}^{N_k}$ : latitude position of a ship included in AIS data acquired between times $T_{k-1}$ and $T_k$

$\{V_k^i\}_{i=1}^{N_k}$ : longitudinal velocity of a ship included in AIS data acquired between times $T_{k-1}$ and $T_k$

$\{W_k^i\}_{i=1}^{N_k}$ : latitude velocity of a ship included in AIS data acquired between times $T_{k-1}$ and $T_k$

$\{T_k^i\}_{i=1}^{N_k}$ : time corresponding to position and velocity of a ship included in AIS data acquired between times $T_{k-1}$ and $T_k$

$CE_k$: circular dispersion of AIS data acquired between times $T_{k-1}$ and $T_k$

$f_N(p)$ : test criterion value for number of ships

$F_{CE}(_P)$ : test criterion value for circular dispersion

p: success rate of determining suitability in validation test ($0 \leq p \leq 1$)

$N_s$: number of times of determining suitability in validation test

$N_F$: number of times of determining unsuitability in validation test

FIG. 4 is a diagram illustrating the test criterion for number of ships according to an embodiment of the present disclosure, and FIG. 5 is a diagram illustrating the test criterion for circular dispersion according to an embodiment of the present disclosure.

As illustrated in FIGS. 4 and 5, $f_N(p)$ and $F_{CE}(_P)$ may be monotonic increasing functions having a positive value as a function of the success rate (p) of determining suitability in the validation test, and may be designed according to the performance of the system. $f_N(p)$ and $F_{CE}(_P)$ may be designed to be automatically determined using the success rate (p) of determining suitability in the validation test.

FIG. 6 illustrates a test result for number of ships according to an embodiment of the present disclosure.

Referring to FIG. 6, when the number of ships from which the AIS data is received is small as illustrated in FIG. 6A, it may be determined that the number of observation data used in the satellite orbit propagator is insufficient and that it is not suitable to accurately estimate the position and velocity of the satellite. In addition, when the number of ships from which the AIS data is received is equal to or greater than a predetermined criterion as illustrated in FIG. 6B, it may be determined that the number of observation data used in the satellite orbit propagator is sufficient and it is suitable to accurately estimate the position and velocity of the satellite.

FIG. 7 illustrates a test result for circular dispersion according to an embodiment of the present disclosure.

Referring to FIG. 7, when the positions of the ships from which the AIS data is received are not evenly distributed as illustrated in FIG. 7A and thus the circular dispersion is lower than a predetermined criterion, it may be determined that it is not suitable to estimate the position and velocity of the satellite. Conversely, when the positions of the ships from which the AIS data is received are dispersed by more than a predetermined criterion as illustrated in FIG. 7B and thus the circular dispersion is higher than the predetermined criterion, it may be determined that it is suitable to accurately estimate the position and velocity of the satellite.

Referring back to FIG. 3, first, initialization is performed to set t = t0 (≥ 0), p = p0 (≥ 0) (S510).

Until time $t = T_k$ (S530-Y), the AIS reception unit 110 continuously receives the AIS data wirelessly transmitted from the ship (S520).

The data acquisition unit 120 may acquire the received AIS data while repeating operations at S520 and S530. The data acquisition unit 120 may acquire AIS data ( $\{T_k^i\}_{i=1}^{N_k}$, $\{X_k^i\}_{i=1}^{N_k}$, $\{Y_k^i\}_{i=1}^{N_k}$, $\{V_k^i\}_{i=1}^{N_k}$, $\{W_k^i\}_{i=1}^{N_k}$ ) between the previous update time $T_{k-1}$ of the satellite orbit propagator and the new update time $T_k$.

Next, the circular dispersion calculation unit 130 may calculate a circular dispersion $CE_k$ by using the AIS data acquired by the data acquisition unit 120 (S540). At S540, the circular dispersion calculation unit 130 may calculate $CE_k$ by using $\{X_k^i\}_{i=1}^{N_k}$, $\{Y_k^i\}_{i=1}^{N_k}$.

The circular dispersion $CE_k$ can be defined as follows. For example, a circular dispersion may be defined as a radius of a circle including points of a predetermined ratio from a center point (or center position) of a cluster of points corresponding to the longitudinal and latitudinal positions of the ship for which AIS data is acquired between $T_{k-1}$ and $T_k$. For example, when the predetermined ratio is 90% and AIS data corresponding to 100 ships is acquired, the radius of a circle including 90 points from the center of a cluster of points corresponding to the positions of the 100 ships may be calculated as a circular dispersion $CE_k$.

Next, the validation test unit 150 may perform a validation test on the AIS data to determine whether it is suitable or not (S550).

The validation test may include a test of number of ships and a test of circular dispersion.

The test of number of ships may be implemented to determine it suitable when the number of AIS data acquired during the predetermined period of time is equal to or greater than a predetermined reference value. That is, when $N_k \geq f_N(p)$, the test of number of ships may determine it suitable.

The test of circular dispersion may determine it suitable when $CE_k \geq f_{CE}(p)$.

When it is determined to be suitable by both the test of number of ships and the test of circular dispersion at S550 (S550-Y), the control unit 140 may transmit the AIS data ( $\{T_k^i\}_{i=1}^{N_k}$, $\{X_k^i\}_{i=1}^{N_k}$, $\{Y_k^i\}_{i=1}^{N_k}$, $\{V_k^i\}_{i=1}^{N_k}$, $\{W_k^i\}_{i=1}^{N_k}$ ) to the coordinate conversion unit 160 (S563).

Next, the coordinate conversion unit 160 may receive the AIS data ( $\{T_k^i\}_{i=1}^{N_k}$, $\{X_k^i\}_{i=1}^{N_k}$, $\{Y_k^i\}_{i=1}^{N_k}$, $\{V_k^i\}_{i=1}^{N_k}$, $\{W_k^i\}_{i=1}^{N_k}$ ) determined to be suitable through the validation test, and convert it from the earth coordinate system into the inertial coordinate system (S570).

In addition, the satellite orbit propagator unit 170 may estimate the position and velocity of the satellite using the AIS data converted into the inertial coordinate system and a predetermined orbit propagator model (S580).

Meanwhile, when it is determined unsuitable by one of the test of number of ships and the test of circular dispersion at S530 (S550-N), the control unit 140 may delete the AIS data ( $\{T_k^i\}_{i=1}^{N_k}$, $\{X_k^i\}_{i=1}^{N_k}$, $\{Y_k^i\}_{i=1}^{N_k}$, $\{V_k^i\}_{i=1}^{N_k}$, $\{W_k^i\}_{i=1}^{N_k}$ ) (S567).

The control unit 140 may calculate the success rate (p) of determining suitability in the validation test by Equation 1 below when the validation test is suitable, and may calculate it by Equation 2 when the validation test is not suitable (S591). In addition, the control unit 140 may change $f_N(p)$ and $f_{CE}(p)$ according to the newly calculated success rate (p) of determining suitability. The operation at S591 may be performed between S550 and S593.

[Equation 1]

$$p = \min(p+\Delta p, 1)$$

[Equation 2]

$$p = \max(p-\Delta p, 0)$$

In Equations 1 and 2, $\Delta p$ is a positive number and may be determined as a design parameter.

That is, as the success rate of determining suitability in the validation test for AIS data increases, the test criterion value $F_{CE}(p)$ for circular dispersion and the test criterion value $f_N(p)$ for number of ships also increase, resulting in strengthened criterion for validation test.

In addition, depending on embodiments, it is also possible to calculate the success rate of determining suitability by Equation 3 below.

[Equation 3]

$$p = N_S/(N_S + N_F)$$

where, $N_s$ may be defined as the number of times of determining suitability in validation test, and $N_F$ may be defined as the number of times of determining unsuitability in validation test.

The success rate of determining suitability may be defined in a manner other than that described herein.

Next, k is increased by 1, and the process moves to S520 to perform a procedure according to the next update time $T_{k+1}$.

Embodiments which do not form part of the claimed invention include a computer-readable recording medium including program instructions for performing various computer implemented operations. The recording medium records a program for executing the methods described above. The recording medium may include program instructions, data files, data structures, and so on, either alone or in combination. Examples of such recording medium include a magnetic medium such as hard disk, floppy disk and magnetic tape, an optical recording medium such as CD and DVD, a magneto-optical medium, and a hardware device configured to store and carry out program instructions, such as ROM, RAM, flash memory, and so on. Examples of program instructions include high-level language codes that may be executed by a computer using an interpreter, and so on as well as machine language codes such as those generated by a compiler.

While the present disclosure has been particularly shown and described with reference to exemplary embodiments thereof, it is to be understood that the disclosure is not limited to the disclosed embodiments, but is rather defined by the appended claims.

## Claims

**1.** A method comprising:
acquiring ship automatic identification system data (AIS data) during a predetermined period of time, wherein the AIS data are received at a satellite;

performing a validation test on the AIS data acquired during the predetermined period of time (S550);
converting the AIS data determined to be suitable through the validation test, from an earth coordinate system into an inertial coordinate system (S570); and
estimating a position and a velocity of the e satellite by using the AIS data converted into the inertial coordinate system and a predetermined orbit propagator model (S580),
**characterized in that**
the method further comprises
calculating a circular dispersion for the AIS data acquired during the predetermined period of time (S540); and
wherein a condition for determining suitability in the validation test includes a test criterion for circular dispersion wherein the calculated circular dispersion is determined to be equal to or greater than a predetermined reference value.

2. The method according to claim 1, wherein a condition for determining suitability in the validation test includes a test criterion for number of ships wherein the number of ships for which the AIS data is acquired during the predetermined period of time is determined to be equal to or greater than a predetermined reference value.

3. The method according to claim 2, wherein a reference value of the test criterion for circular dispersion and a reference value of the test criterion for number of ships are increased as a success rate of determining suitability in the validation test for the AIS data increases.

4. A device comprising:

   a data acquisition unit (120) that acquires AIS data that are received at a satellite;
   a validation test unit (150) that performs a validation test of the AIS data acquired by the data acquisition unit (120) during a predetermined period of time;
   a coordinate conversion unit (160) that converts the AIS data determined to be suitable through the validation test, from an earth coordinate system into an inertial coordinate system; and
   a satellite orbit propagator unit (170) that estimates a position and a velocity of the satellite by using the AIS data converted into the inertial coordinate system and a predetermined orbit propagator model,
   **characterized in that**
   the device further comprises a circular dispersion calculation unit (130) that calculates a circular dispersion for the AIS data acquired during the predetermined period of time, and
   wherein a condition for determining suitability in the validation test includes a test criterion for circular dispersion wherein the calculated circular dispersion is determined to be equal to or greater than a predetermined reference value.

5. The device according to claim 4, wherein a condition for determining suitability in the validation test includes a test criterion for number of ships wherein the number of ships for which the AIS data is acquired during the predetermined period of time is determined to be equal to or greater than a predetermined reference value.

6. The device according to claim 5, wherein a reference value of the test criterion for circular dispersion and a reference value of the test criterion for number of ships are increased as a success rate of determining suitability in the validation test for the AIS data increases.

## Patentansprüche

1. Verfahren, umfassend:
   Erfassen von Daten des automatischen Schiffsidentifikationssystems (AIS-Daten) während einer vorbestimmten Zeitspanne, wobei die AIS-Daten von einem Satelliten empfangen werden; Durchführen eines Validierungstests mit den AIS-Daten, die während der vorbestimmten Zeitspanne erfasst wurden (S550);

   Umwandeln der AIS-Daten, die durch den Validierungstest als geeignet bestimmt wurden, von einem Erdkoordinatensystem in ein Trägheitskoordinatensystem (S570); und
   Schätzen einer Position und einer Geschwindigkeit des Satelliten unter Verwendung der in das Trägheitskoordinatensystem umgewandelten AIS-Daten und eines vorbestimmten Bahnpropagatormodells (S580),
   **dadurch gekennzeichnet, dass**
   das Verfahren ferner Folgendes umfasst
   Berechnen einer kreisförmigen Streuung für die AIS-Daten, die während der vorbestimmten Zeitspanne erfasst wurden (S540); und
   wobei eine Bedingung für das Bestimmen der Eignung im Validierungstest ein Testkriterium für die kreisförmige Streuung beinhaltet, wobei die berechnete kreisförmige Streuung als gleich oder größer als ein vorbestimmter Referenzwert bestimmt wird.

2. Verfahren gemäß Anspruch 1, wobei eine Bedingung für das Bestimmen der Eignung im Validierungstest ein Testkriterium für eine Anzahl von Schiffen beinhaltet, wobei die Anzahl von Schiffen, für die die AIS-Daten während des vorbestimmten Zeitraums erfasst werden, so bestimmt wird, dass sie gleich oder größer als ein vorbestimmter Referenzwert ist.

3. Verfahren gemäß Anspruch 2, wobei ein Referenzwert des Testkriteriums für eine kreisförmige Streuung und ein Referenzwert des Testkriteriums für eine Anzahl von Schiffen erhöht werden, wenn die Erfolgsquote beim Bestimmen der Eignung im Validierungstest für die AIS-Daten steigt.

**4.** Vorrichtung, umfassend

eine Datenerfassungseinheit (120), die AIS-Daten erfasst, die von einem Satelliten empfangen werden;
eine Validierungstesteinheit (150), die einen Validierungstest der von der Datenerfassungseinheit (120) während einer vorbestimmten Zeitspanne erfassten AIS-Daten durchführt;
eine Koordinatenumwandlungseinheit (160), die die durch den Validierungstest als geeignet bestimmten AIS-Daten von einem Erdkoordinatensystem in ein Trägheitskoordinatensystem umwandelt; und
eine Satellitenbahnpropagatoreinheit (170), die eine Position und eine Geschwindigkeit des Satelliten unter Verwendung der in das Trägheitskoordinatensystem umgewandelten AIS-Daten und eines vorgegebenen Bahnpropagatormodells schätzt,
**dadurch gekennzeichnet, dass**
die Vorrichtung ferner eine Einheit (130) zum Berechnen der kreisförmigen Streuung umfasst, die eine kreisförmige Streuung für die AIS-Daten berechnet, die während der vorbestimmten Zeitspanne erfasst wurden, und wobei eine Bedingung für das Bestimmen der Eignung im Validierungstest ein Testkriterium für die kreisförmige Streuung beinhaltet, wobei die berechnete kreisförmige Streuung als gleich oder größer als ein vorbestimmter Referenzwert bestimmt wird.

**5.** Vorrichtung gemäß Anspruch 4, wobei eine Bedingung für das Bestimmen der Eignung im Validierungstest ein Testkriterium für eine Anzahl von Schiffen umfasst, wobei die Anzahl der Schiffe, für die die AIS-Daten während des vorbestimmten Zeitraums erfasst werden, so bestimmt wird, dass sie gleich oder größer als ein vorbestimmter Referenzwert ist.

**6.** Vorrichtung gemäß Anspruch 5, wobei ein Referenzwert des Testkriteriums für eine kreisförmige Streuung und ein Referenzwert des Testkriteriums für eine Anzahl von Schiffen mit zunehmender Erfolgsquote beim Bestimmen der Eignung im Validierungstest für die AIS-Daten erhöht werden.

## Revendications

**1.** Une méthode comprenant :
acquérir des données du système d'identification automatique du navire (données AIS) pendant une période de temps prédéterminée, les données AIS étant reçues par un satellite ; effectuer un test de validation sur les données AIS acquises pendant la période de temps prédéterminée (S550) ;

convertir les données AIS jugées adéquates à l'issue du test de validation, d'un système de coordonnées terrestres en un système de coordonnées inertielles (S570) ; et
l'estimation d'une position et d'une vitesse du satellite à l'aide des données AIS converties dans le système de coordonnées inertielles et d'un modèle de propagateur d'orbite prédéterminé (S580), **caractérisée par le fait que**
la méthode comprend en outre
calculer une dispersion circulaire pour les données AIS acquises pendant la période de temps prédéterminée (S540) ; et
dans lequel une condition pour déterminer l'aptitude au test de validation comprend un critère de test pour la dispersion circulaire dans lequel la dispersion circulaire calculée est déterminée comme étant égale ou supérieure à une valeur de référence prédéterminée.

**2.** La méthode selon la revendication 1, dans laquelle une condition pour déterminer l'aptitude au test de validation comprend un critère de test pour un nombre de navires dans lequel le nombre de navires pour lesquels les données AIS sont acquises au cours de la période de temps prédéterminée est déterminé comme étant égal ou supérieur à une valeur de référence prédéterminée.

**3.** Méthode selon la revendication 2, dans laquelle une valeur de référence du critère de test pour la dispersion circulaire et une valeur de référence du critère de test pour un nombre de navires sont augmentées à mesure que le taux de réussite de la détermination de l'adéquation dans le test de validation des données AIS augmente.

**4.** Un dispositif comprenant

une unité d'acquisition de données (120) qui acquiert des données AIS reçues par un satellite ;
une unité de test de validation (150) qui effectue un test de validation des données AIS acquises par l'unité d'acquisition de données (120) pendant une période de temps prédéterminée ;
une unité de conversion de coordonnées (160) qui convertit les données AIS jugées adéquates lors du test de validation, d'un système de coordonnées terrestres en un système de coordonnées inertielles ; et
une unité de propagation de l'orbite du satellite (170) qui estime une position et une vitesse du satellite en utilisant les données AIS converties dans le système de coordonnées inertielles et un modèle de propagateur d'orbite prédéterminé,
**caractérisé par le fait que**
l'appareil comprend en outre une unité de calcul de la dispersion circulaire (130) qui calcule une dispersion circulaire pour les données AIS acquises pendant la période de temps prédéterminée, et
dans lequel une condition pour déterminer l'aptitude au test de validation comprend un critère de test pour la dispersion circulaire dans lequel la dispersion circulaire calculée est déterminée comme étant égale ou supérieure à une valeur de référence prédéterminée.

**5.** Le dispositif selon la revendication 4, dans lequel une condition pour déterminer l'aptitude au test de validation comprend un critère de test pour un nombre de navires dans lequel le nombre de navires pour lesquels les données AIS sont acquises au cours de la période de temps prédéterminée est déterminé comme étant égal ou supérieur à une valeur de référence prédéterminée.

**6.** Dispositif selon la revendication 5, dans lequel une valeur de référence du critère de test pour la dispersion circulaire et une valeur de référence du critère de test pour le nombre de navires sont augmentées à mesure que le taux de réussite de la détermination de l'adéquation dans le test de validation des données AIS augmente.

FIG. 1

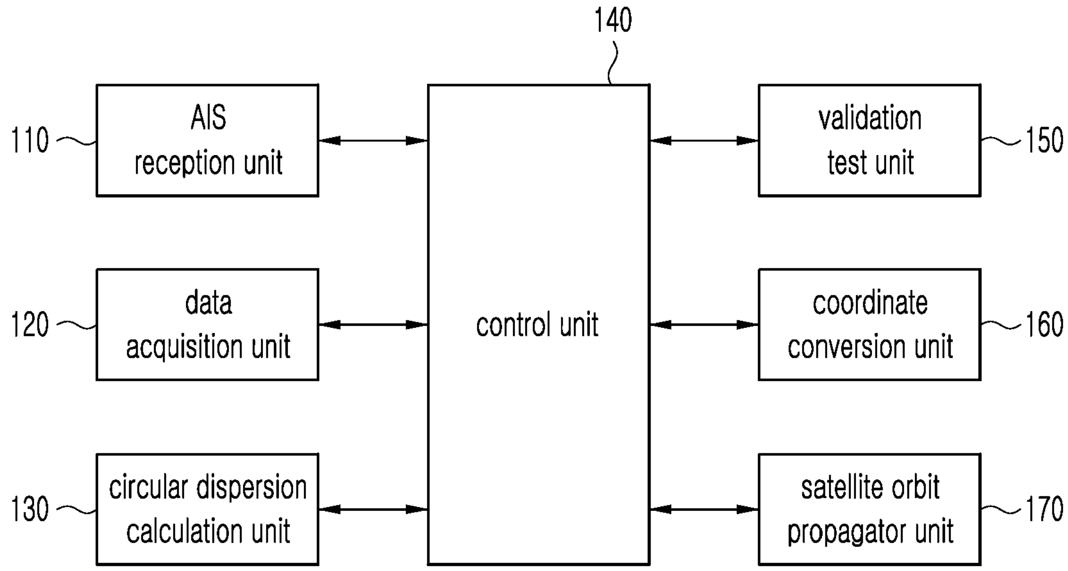
140
110
AIS reception unit
120
data acquisition unit
130
circular dispersion calculation unit
control unit
validation test unit
150
coordinate conversion unit
160
satellite orbit propagator unit
170

FIG. 2A

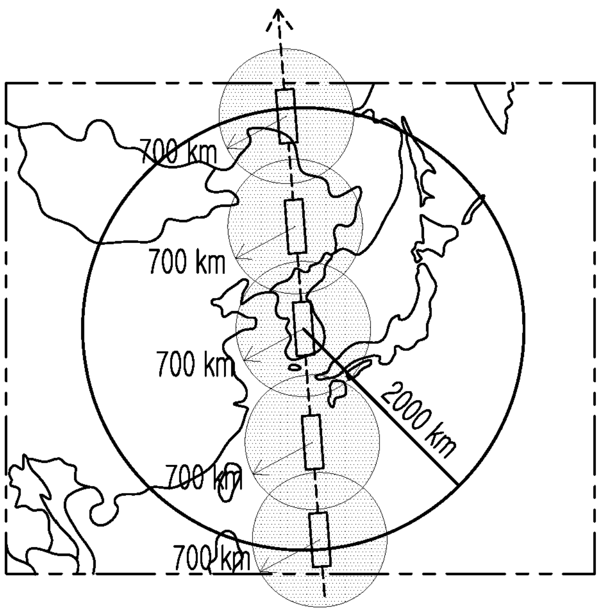
700 km
700 km
700 km
700 km
700 km
2000 km

FIG. 2B

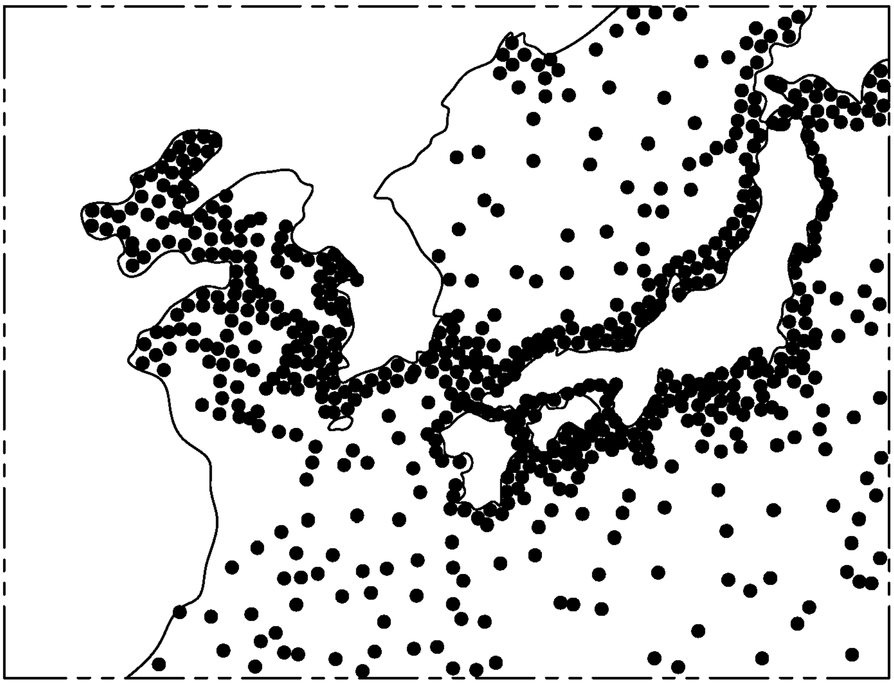

FIG. 3

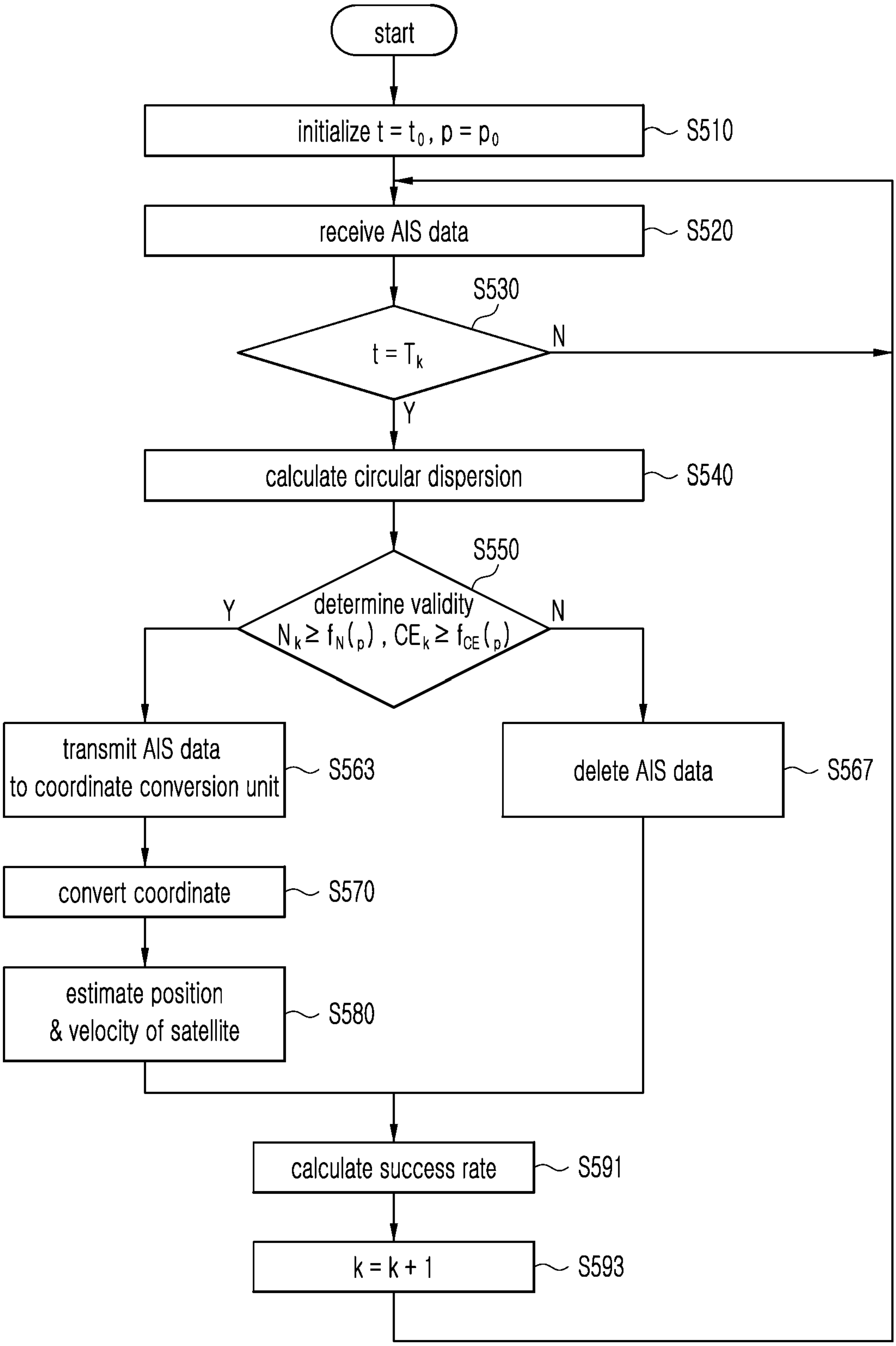
start
initialize t = t0 , p = p0
S510
receive AIS data
S520
S530
t = Tk
N
Y
calculate circular dispersion
S540
S550
determine validity
Nk ≥ fN(p) , CEk ≥ fCE(p)
Y
N
transmit AIS data
to coordinate conversion unit
S563
delete AIS data
S567
convert coordinate
S570
estimate position
& velocity of satellite
S580
calculate success rate
S591
k = k + 1
S593

FIG. 4

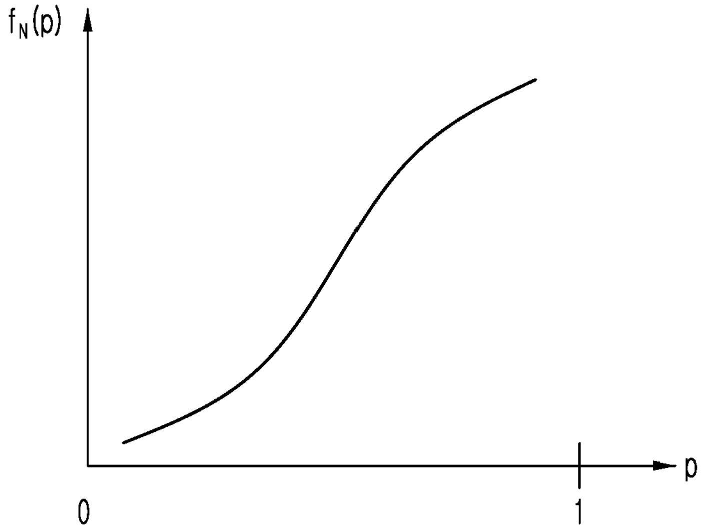


FIG. 5

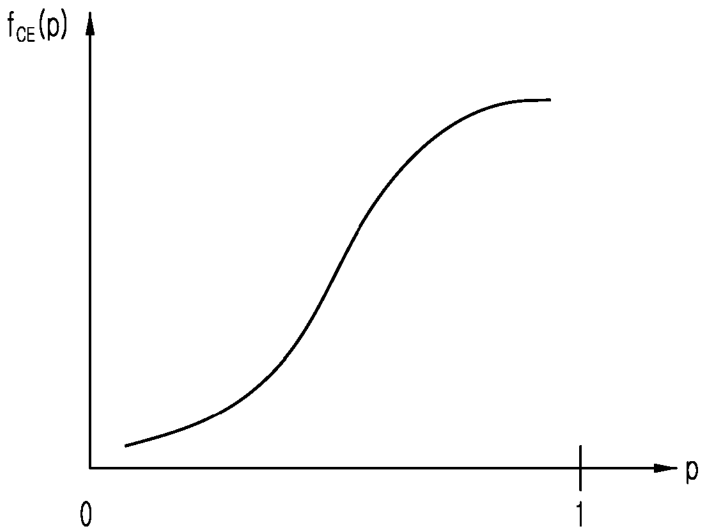

FIG. 6A

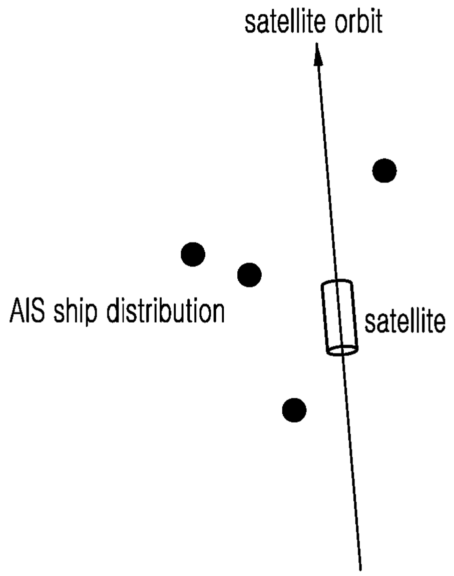
satellite orbit
AIS ship distribution
satellite

FIG. 6B

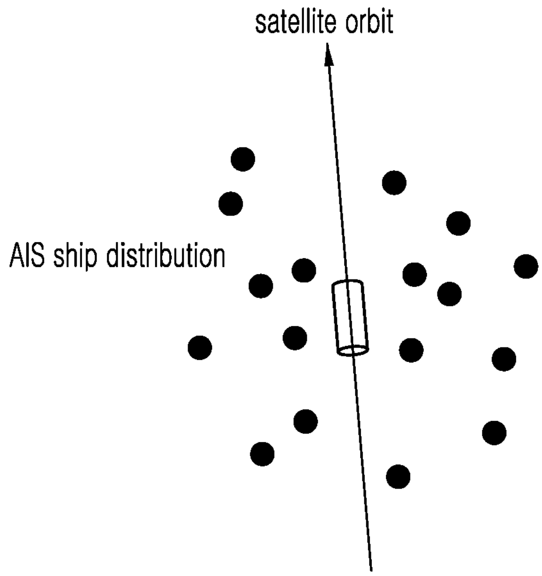
satellite orbit
AIS ship distribution

FIG. 7A

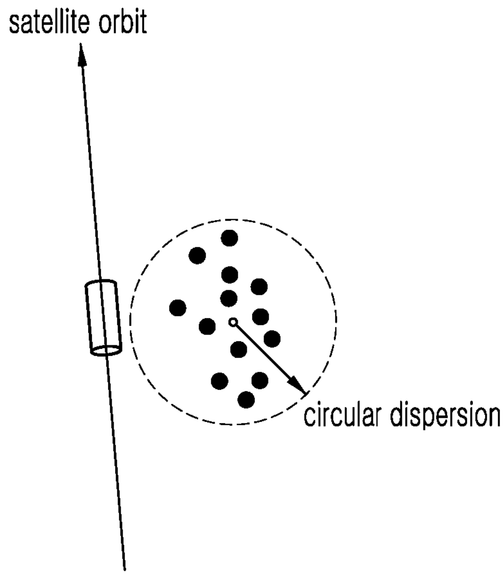
satellite orbit
circular dispersion

FIG. 7B

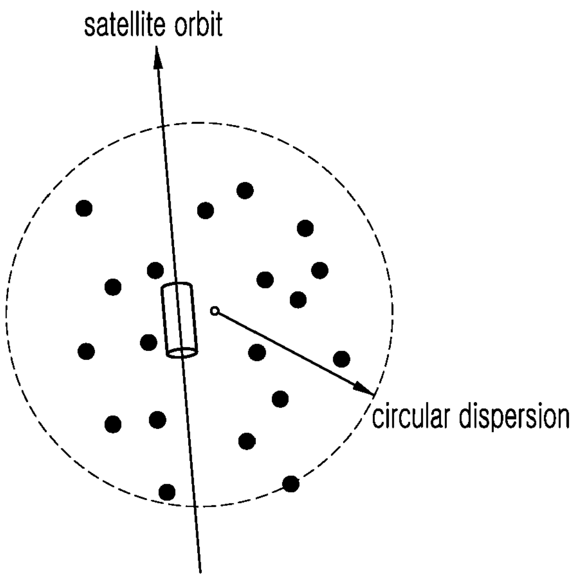
satellite orbit
circular dispersion

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2013058271 A1